Europäisches Patentamt

European Patent Office

Office européen des brevets

(19)

(11) **EP 1 317 145 A1**

(12) **EUROPEAN PATENT APPLICATION**

(43) Date of publication:
**04.06.2003 Bulletin 2003/23**

(51) Int Cl.$^7$: **H04N 7/30**

(21) Application number: **01830738.9**

(22) Date of filing: **30.11.2001**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **STMicroelectronics S.r.l.**
**20041 Agrate Brianza (Milano) (IT)**

(72) Inventors:
• **Battiato, Sebastiano**
**95022 Acicatena (Catania) (IT)**

• **Mancuso, Massimo**
**20052 Monza (Milano) (IT)**

(74) Representative: **Maggioni, Claudio et al**
**Jacobacci & Partners S.p.A.,**
**Via delle Quattro Fontane 15**
**I-00184 Roma (IT)**

Remarks:
The application is published incomplete as filed
(Article 93 (2) EPC).

(54) **Optimized quantization method for compressing digital images**

(57)    A method of compressing digital images, represented by pixel matrices, that employs the transform into the two-dimensional spatial frequency domain and a quantization process realized with matrices optimised in accordance with psycho-visual and statistical criteria, where the statistical criteria relate to specific image classes.

*Fig. 2*

# Description

The present invention concerns the acquisition and processing of digital images and, more particularly, an image compression method.

Digital images are at present used in numerous applications, digital photography being a case in point.

In normal usages digital images are generally made to undergo a compression and encoding process. This process, also referred to more simply as compression, reduces the occupied memory quantity and makes it possible, for example, to increase the maximum number of images that can simultaneously be stored in the memory unit of a digital still camera. Furthermore, compression promotes shorter transmission times when the images have to be transferred to some external peripheral device or, more generally, on telecommunication networks such as - for example - Internet.

The most common and efficient compression methods at present employed are based on the transform of the images into the two-dimensional spatial frequency domain, especially the so-called discrete cosine transform (or DCT). An example of this type is represented by the system defined by the specifications of the JPEG (Joint Photographic Expert Group) international standard for the compression/encoding of images (ISO/CCITT).

Proposing a generic and flexible compression system, this standard really defines several compression methods that can all be derived from two basic methods. One of these employs the DCT with lossy compression, i.e. with loss of information. The present invention concerns this method, the so-called JPEG baseline, and more generally compression methods based on the DCT or similar two-dimensional spatial transforms.

A digital image can be represented by means of a matrix of elements, known as pixels, each of which corresponds to an elementary portion of the image and comprises one or more digital values, each associated with an optical component. In a monochromatic image, for example, just a single value is associated with each pixel, and in this case it is usually said that the image consists of just a single channel or plane.

In a coloured RGB image, on the other hand, associated with each pixel there are three digital values that correspond to the three components (red, green, blue) of additive chromatic synthesis. In this case the image can be decomposed into three distinct planes or channels.

In a DCT-based compression algorithm the image is subdivided into sub-matrices or sub-blocks, each sized 8 x 8 pixels, and the DCT is then applied to each sub-matrix. When the image is made up of several planes, the procedure is applied separately and independently to each plane.

64 coefficients arranged in an 8 x 8 matrix are obtained for each sub-block and correspond to the amplitudes of the orthogonal waveforms that define the representation of the sub-block in the two-dimensional spatial frequency domain. In this space the compression algorithm reduces the information content by selectively eliminating certain spatial frequencies from the image.

The reduction of the information quantity is performed by dividing the sub-blocks by a matrix (8x8) of integer quantization coefficients: in practice each DCT coefficient is divided by the corresponding quantization coefficient and the result is then rounded off to the nearest integer. On account of the division and rounding off operations and depending on the actual value of the quantization coefficients, the "quantized" sub-blocks obtained in this manner contain a certain number of zero elements. When these sub-blocks, which generally contain many coefficients that are equal to zero, are encoded - as in the case of the JPEG standard, for example - with an RLE (Run Length Encoding) and then subjected to Huffmann encoding, the memory occupation is reduced without introducing any further information losses.

Quantization is essentially a process of reducing the precision of the DCT coefficients. The greater the value of the coefficients of the quantization matrix, the greater will be the information reduction. However, since there is no way of restoring the eliminated original information, an excessive quantization could lead to a considerable deterioration of the image quality.

Optimization of the quantization matrices is connected with the possibility of improving the performance of the compression algorithm and involves some kind of compromise between final image quality and compression efficiency.

A characterization of the quality loss introduced into a digital image by compression algorithm is provided by the so-called PSNR (Peak-to-Peak Signal to Noise Ratio), which is a measure in dB of the quantity of noise introduced by the algorithm at a given compression ratio. The compression ratio of an algorithm, on the other hand, is measured in terms of bit rates. The bit rate represents the number of bits that are needed to represent a pixel in the compressed and encoded image.

The JPEG standard only suggests the use of quantization matrices synthesized on the basis of perceptive criteria that take due account of the sensitivity of the human eye to the DCT spatial frequencies and are known by the name of HSV (Human Visual System) criteria.

The standard matrices or tables were obtained by H. Loesheller on the basis of empirical studies from which he deduced that the human visual system is more sensitive to the variations of the coefficients associated with low DCT spatial frequencies.

It has been shown that these tables produce substantial artefacts when the images are shown on high-resolution displays.

Prior art knows of numerous attempts that were made - using different approaches - with a view to pinpointing optimal tables. The problem is not by any means easy to solve, because these tables are greatly dependent on the contents of the image.

The best results have been obtained with adaptive or iterative procedures, which obtain the optimal tables block by block on the basis of criteria of statistical, contentual or perceptive analysis.

Since these methods optimise the quantization matrix block by block, there many cases when they do not comply with the JPEG standard. This standard, indeed, envisages the use of just a single quantization matrix for each plane of the image. This for obvious reasons of simplifying the realization of the compression/decompression blocks.

U.S. Patent 5,629,780, for example, proposes a method that obtains the optimisation by means of a block-by-block synthesis. This method is based on an adaptive/iterative process that ends when a predetermined perceptual error is attained. It springs to the eye that this method does not comply with the JPEG standard and, above all, that it involves a considerable computational cost on account of the iterative process it employs.

The present invention therefore sets out to propose an efficient method for producing high-quality compressed images and overcoming the drawbacks associated with the prior art.

According to the invention this aim can be attained with a compression method optimised as described in general terms in the first claim hereinbelow. Very briefly, the present invention proposes an approach based on both perceptual and statistical criteria and determines the optimal quantization tables for specific classes of images.

The invention will be understood more readily from the detailed description given below of a particular embodiment, the said embodiment being merely an example and should not therefore be regarded as in any way limitative, together with the accompanying drawings, of which:

- Figure 1 shows the block logic scheme of a first digital still camera that utilizes the compression method in accordance with the invention,
- Figure 2 shows the block logic scheme of a second digital still camera that utilizes the compression method in accordance with the invention,
- Figure 3 shows the function $f(\lambda)$ for the three classes of images considered, and
- Figure 4 shows the experimental results that outline the performance improvements in terms of PSNR of the method in accordance with the invention with respect to the prior art.

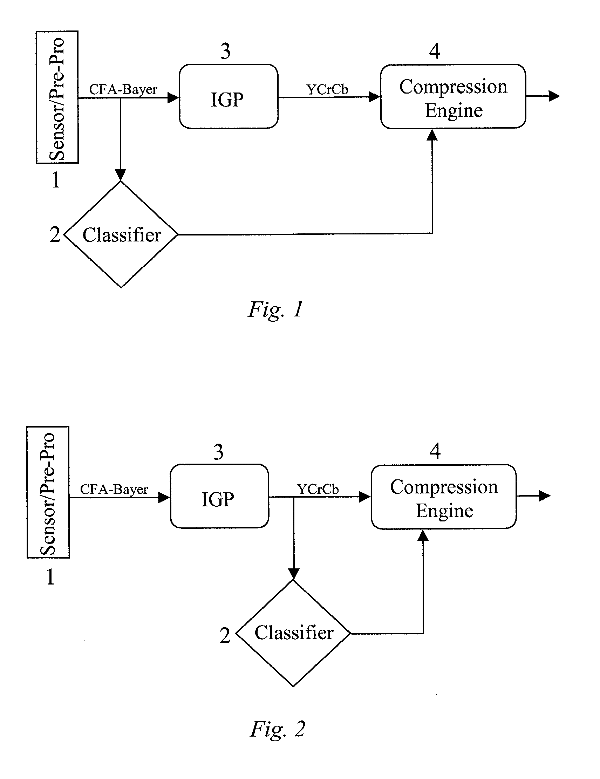

As can be seen from Figure 1, in a digital still camera that utilizes the method in accordance with the invention the CFA (Colour Filter Array) image is acquired and pre-processed by block 1 ("Sensor/Pre-Pro") and then analyzed by block 2 ("Classifier"). This block, with an algorithm of a type known to a person skilled in the art, classifies the image as belonging to one of the classes of a predefined set. In this particular embodiment we shall assume, but only by way of example, that the images are subdivided into three classes, namely, respectively, "Documents", "Portraits" and "Landscapes".

Thereafter the image is subjected to a complex pre-processing phase, and this in such a way that the CFA image, after passing block 3 ("IGP" or Image Generation Pipeline) gives rise to a high-quality and non-compressed YCrCb image.

The YCrCb image is compressed by block 4 ("Compression Engine"), which can be, for example, an encoding/compression block in conformity with the JPEG standard baseline. The input of block 3 could also be an image in some format other than YCrCb, even though this format constitutes the best choice. Indeed, the JPEG compression algorithm operates on the three planes that make up the colour image: a YCrCb format presents the luminance information (channel or plane Y) already separated from the chrominance information (channels or planes Cr and Cb). Since the human eye is less sensitive to these chrominance planes, a greater quantity of information can be discarded from the channels Cr and Cb.

As can be seen from Figure 2, in a different embodiment block 2 ("Classifier") could also examine the image on the output side of block 3 ("IGP").

The encoding/compression block 4 ("Compression Engine") subdivides each plane of the image into sub-blocks, each sized 8x8 pixels. Each sub-block is transformed into an 8x8 DCT coefficient matrix $F_{i,j}$, where i=0...7 and j=0...7. The first DCT coefficient $F_{00}$ is called DCT component and represents the mean value of the of the component associated with the plane under consideration in the given sub-block. The other coefficients, referred to as AC, represent gradually increasing spatial frequencies.

The particular transformation method used forms part of the state of the art and will not therefore be described in detail. It would also be possible, for example, to subdivide the image into sub-blocks of size MxN, where M and N are any integers whatsoever, or to transform the sub-blocks into any two-dimensional domain of spatial frequencies. Again, it would also be possible to sub-sample the chrominance planes in accordance with the known technique, thus further reducing the information of the chromatic matrices.

As soon as the DCT coefficients have been obtained, the quantization can be got under way and this is done substantially in accordance with the known technique, but using optimised matrices that constitute the true object of the present invention.

By way of example, we shall now describe the synthesis of a quantization matrix Q for the luminance plane Y. The quantization matrices for the other planes can be obtained by means of an analogous procedure, but one could also consider using the quantization matrices suggested by the JPEG standard.

The perceptual redundancy of a digital image was the first thing considered for the purposes of optimising the performance of a quantization matrix.

To this end use was made of a psycho-visual HSV model based on the modulation transfer function (MTF) and the contrast sensitivity function (CSF).

The modulation transfer function describes the sensitivity of the human eye to sinusoidal waveforms as the spatial (or DCT) frequency varies. The classical expression used to represent this function is as follows:

$$H(\omega) = a(b + c\omega) \exp(-c\omega)^d$$

where a=2.6, b=0.192, c=0.114, d=1.1 and $\omega$ is the radial spatial frequency in cycles per degree of viewing angle (the latter is determined both by the screen resolution and the viewing distance). The radial frequency $\omega$ can be obtained from the indices i,j of the DCT coefficients by means of a known relationship.

Another measure of the sensitivity of the human eye to spatial frequencies is provided by the contrast sensitivity function. Two different CSFs were taken into consideration in the model: the first is an explicit function of the spatial frequency $\omega$:

$$S_\lambda(\omega) = -4.47\omega^2 + 8.86\omega - 4.39$$

where $\omega$ represents the natural logarithm of the number of cycles per degree of viewing angle that appears to the retina.

The other, the so-called angular CSF, is a function of the indices i,j, namely

$$S_A(\alpha) = -0.0222\alpha - 0.001\alpha^2$$

where $\alpha = \min\{\text{arctg}(j/i), 90 - \text{arctg}(j/i)\}$.

All the models used are known in literature. Nevertheless, with a view to realizing a more accurate model of the human visual system and its sensitivity to the spatial frequencies, different models were combined in the following manner:

$$P_{i,j} = H(\omega) + \ln(S_\lambda(\omega) + S_A(\alpha)) \qquad i,j = 0,1,...,7.$$

The quantization coefficient can be obtained from P in accordance with the following formula:

$$q_{i,j} = 1 + \text{round}_\lfloor 100(G - P_{i,j})/G \rfloor$$

where G is an arbitrary normalization constant. For example, when P varies between 0 and $P_{max}$, the choice of $G=P_{max}$ will make the coefficients vary between $q_{min}=1$ and $q_{max}=101$.

Obviously, the utilized parameters or functions or the manner in which they are combined can be adapted to particular visual conditions or specific needs.

For the purposes of the optimisation, however, this approach is not of itself sufficient. A further performance improvement can be obtained by using the information contained in a statistical model of the distribution of the spatial frequency coefficients.

Numerous attempts have already been made to pinpoint and exploit the statistical regularity of the DCT coefficients. But this approach has so far proved to be dangerous on account of the significant differences between the possible effective frequency content of the images and a given statistical model.

The method in accordance with the present invention exploits the statistical analysis of the images subdivided into different classes.

Three classes of images were considered for this purpose, namely, documents, portraits and landscapes, and a considerable number of images of each class was subjected to statistical analysis. With a view to approximating the statistical distribution of the DCT coefficients within each class, use was made of a Laplace distribution model, i.e.:

$$p_{i,j}(x) = \frac{\lambda_{i,j}}{2} e^{\lambda_{i,j}|x|} \qquad i,j = 0,1,...,7$$

where:

$$\lambda_{i,j} = \sqrt{2}/\sigma_{i,j}$$

and $\sigma_{i,j}$ is the standard deviation of the DCT coefficient of index i,j as measured over a large sample of images belonging to the same class.

Experimental results have shown the validity of this model of the coefficient distribution.

Thanks to these statistical measurements, it proved possible to associate a standard deviation $\sigma_{i,j}$ with each DCT coefficient. It was noted that when the DCT frequencies are subdivided into low, medium and high frequencies, the standard deviations $\sigma_{i,j}$ of the corresponding coefficients have values relative to each other that are, respectively, low, medium and high.

In view of the difficulty of continuing with an approach of the analytical type, experimental attempts were then made to find a statistical weight function

$$f(\lambda) = f(\sqrt{2}/\sigma)$$

of the sole variable $\sigma$ that would optimise the quantization matrices on the basis of the following formula:

$$q_{i,j} = 1 + round_{\llcorner}\ 100(G-P_{i,j})f(\lambda_{i,j})/G\lrcorner.$$

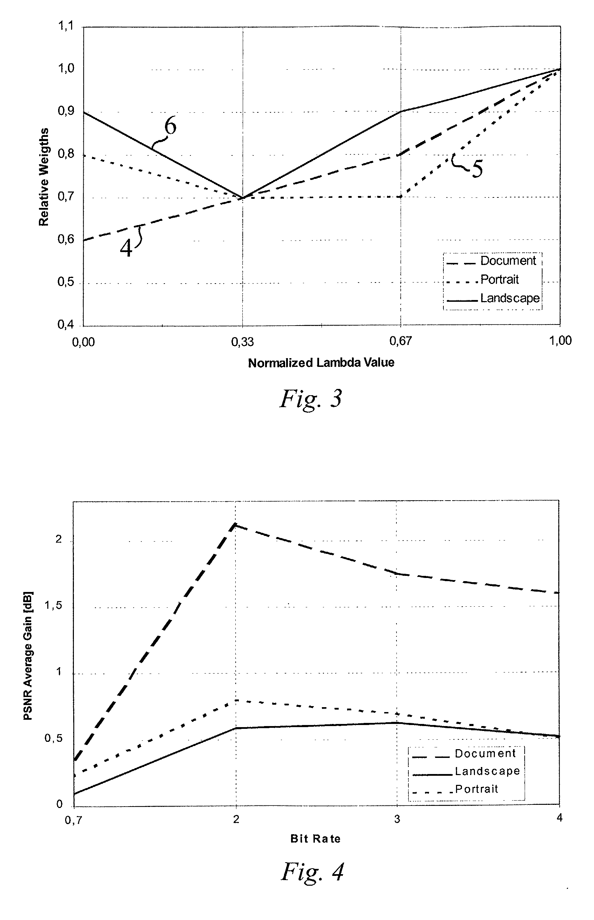

The optimization was carried out with a large number of simulations, evaluating the PSNR gain in dB with respect to the performances of the standard table, the bit rate remaining constant. It was noted that the best results were obtained with a weight function $f(\lambda)$ shown in Figure 3, where curve 4 refers to the document class, curve 5 refers to the portrait class, and curve 6 refers to the landscape class. The values of $\lambda$ in the graph of Figure 3 have been normalized with respect to the largest measured value. The quantization coefficients of the DC components were all forced to 1, as in prior art. This was done in order to avoid having lack of tonality uniformity between adjacent sub-blocks of the decoded and decompressed image ("blocking effect").

As can be noted in Figure 3, the function $f(\lambda)$ of each of the classes was subdivided on the basis of the maximum measured value of $\lambda$ into three tracts for, respectively, low, medium and high spatial frequencies.

The experimental results in terms of average PSNR gain with respect to the standard tables are shown in Figure 4. These results were obtained after a "training" phase in the course of which the three classes were statistically characterized, using about a hundred coloured of different resolution and size of each class. It can be noted that the best results are obtained with images of the document type, because - as compared with the other two specific document classes here considered - these have more marked and therefore more readily captured statistical regularities.

The described method, using a single quantization matrix per plane, therefore offers a concrete gain that is confirmed by the experimental results.

Obviously, since the JPEG standard envisages the possibility of the quantization matrix of a plane being linearly scaled by means of a gain factor (this with a view to obtaining a predefined bit rate), it will be possible to introduce this or other known variations or adaptations into the described method in accordance with specific needs.

## Claims

1. A method for compressing a digital image, based on the image transform into a two-dimensional domain of spatial frequencies and operating independently on the different planes that make up the image, comprising the following sequence of operations:

- assigning the image to a class chosen from among a set of predefined classes,
- subdividing each plane of the image into sub-matrices B,
- obtaining for each sub-matrix B a coefficient matrix F of the same size as B that represents B in the two-dimensional spatial frequency domain,
- dividing each matrix F by a quantization matrix Q, different from one plane to another, in which each element of the matrix Q is associated with the spatial frequency of the corresponding coefficient of F,

**characterized in that** Q is synthesized element by element for at least one of the planes of the digital image on the basis of at least one function of the sensitivity of the human visual system to the spatial frequencies and on the basis of at least one function of at least one parameter that characterizes the statistical distribution of the coefficients of F in the class to which the image has been assigned.

2. A method in accordance with Claim 1, wherein the digital image is in YCrCb format.

3. A method in accordance with Claim 2, wherein the optimization is performed only for the luminance plane Y.

5. A method in accordance with either Claim 2 or Claim 3, wherein the chrominance planes are sub-sampled.

6. A method in accordance with Claim 1, wherein the digital image is monochromatic, that is to say, comprises just a single plane.

7. A method in accordance with any one of the preceding claims, wherein the DCT constitutes the transform into the two dimensional spatial frequency domain.

8. A method in accordance with any one of the preceding claims, wherein the sub-matrices B are square sub-blocks having 8-pixel sides.

9. A method in accordance with any one of the preceding claims, wherein the sensitivity function of the human visual system is an MTF model.

10. A method in accordance with any one of Claims 1 to 8, wherein the sensitivity function of the human visual system is an CSF model.

11. A method in accordance with any one of Claims 1 to 8, wherein the sensitivity function of the human visual system is a combination of CSF and MTF models.

13. A method in accordance with any one of the preceding claims, wherein the statistical distribution parameter is the standard deviation of the coefficients of the matrices F in accordance with a Laplace statistical distribution model.

**14.** A method in accordance with any one of the preceding claims, wherein the quantization element $Q_{00}$ of the DC coefficient is forced to the value 1.

**15.** A JPEG standard compression method that employs a method in accordance with any one of the preceding claims.

**16.** A digital still camera wherein the compression of the acquired images is effected by means of a method in accordance with any one of the preceding claims.

**17.** A digital still camera in accordance with Claim 16, wherein the method assigns a class to the CFA image.

**18.** A digital still camera in accordance with Claim 16, wherein the method assigns the class to the image on the output side of the IGP block.

Fig. 1

Fig. 2

*Fig. 3*

*Fig. 4*

# EUROPEAN SEARCH REPORT

Application Number

EP 01 83 0738

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BATTIATO S ET AL: "Psychovisual and statistical optimization of quantization tables for DCT compression engines" PROCEEDINGS 11TH INTERNATIONAL CONFERENCE ON IMAGE ANALYSIS AND PROCESSING, PROCEEDINGS ICIAP 2001. 11TH INTERNATIONAL CONFERENCE ON IMAGE ANALYSIS AND PROCESSING, PALERMO, ITALY, 26-28 SEPT. 2001, pages 602-606, XP002203687 2001, Los Alamitos, CA, USA, IEEE Comput. Soc, USA ISBN: 0-7695-1183-X * the whole document * | 1-18 | H04N7/30 |
| X | US 5 883 979 A (BHASKARAN VASUDEV ET AL) 16 March 1999 (1999-03-16) * the whole document * | 1-18 | |
| A | CHEN Y ET AL: "FAST COMPUTATION OF PERCEPTUALLY OPTIMAL QUANTIZATION MATRICES FOR MPEG-2 INTRA PICTURES" PROCEEDINGS OF THE 1998 INTERNATIONAL CONFERENCE ON IMAGE PROCESSING. ICIP '98. CHICAGO, IL, OCT. 4 - 7, 1998, INTERNATIONAL CONFERENCE ON IMAGE PROCESSING, LOS ALAMITOS, CA: IEEE COMPUTER SOC, US, vol. 3 CONF. 5, 4 October 1998 (1998-10-04), pages 419-422, XP001044449 ISBN: 0-8186-8822-X * page 419 * | 1,16 | TECHNICAL FIELDS SEARCHED (Int.Cl.7) H04N |

-/--

The present search report has been drawn up for all claims

| Place of search | Date of completion of the search | Examiner |
|---|---|---|
| THE HAGUE | 27 June 2002 | With, F |

EPO FORM 1503 03.82 (P04C01)

European Patent Office

## EUROPEAN SEARCH REPORT

Application Number

EP 01 83 0738

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | SAKRISON DAVID J: "IMAGE CODING APPLICATIONS OF VISION MODELS" ADV ELECTRON ELECTRON PHYS 1979 ACADEMIC PRESS, NEW YORK, NY, vol. 12, 1979, pages 21-71, XP002203688 * the whole document * | 1,16 | |
| A | US 5 629 780 A (WATSON ANDREW B) 13 May 1997 (1997-05-13) * the whole document * | 1,16 | |
| A | WATSON A B: "Visually optimal DCT quantization matrices for individual images" DATA COMPRESSION CONFERENCE, 1993. DCC '93. SNOWBIRD, UT, USA 30 MARCH-2 APRIL 1993, LOS ALAMITOS, CA, USA,IEEE COMPUT. SOC, US, 30 March 1993 (1993-03-30), pages 178-187, XP010031834 ISBN: 0-8186-3392-1 * the whole document * | 1,16 | TECHNICAL FIELDS SEARCHED (Int.Cl.7) |
| A | JAYANT N ET AL: "SIGNAL COMPRESSION BASED ON MODELS OF HUMAN PERCEPTION" PROCEEDINGS OF THE IEEE, IEEE. NEW YORK, US, vol. 81, no. 10, 1 October 1993 (1993-10-01), pages 1385-1421, XP000418793 ISSN: 0018-9219 * the whole document * | 1,16 | |

-/--

The present search report has been drawn up for all claims

| Place of search | Date of completion of the search | Examiner |
|---|---|---|
| THE HAGUE | 27 June 2002 | With, F |

EPO FORM 1503 03.82 (P04C01)

European Patent
Office

**EUROPEAN SEARCH REPORT**

Application Number

EP 01 83 0738

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| A | CHITPRASERT B ET AL: "HUMAN VISUAL WEIGHTED PROGRESSIVE IMAGE TRANSMISSION" IEEE TRANSACTIONS ON COMMUNICATIONS, IEEE INC. NEW YORK, US, vol. 38, no. 7, July 1990 (1990-07), pages 1040-1044, XP000159542 ISSN: 0090-6778 * the whole document * --- | 1,16 | |
| A | PETERSON H A ET AL: "AN IMPROVED DETECTION MODEL FOR DCT COEFFICIENT QUANTIZATION" PROCEEDINGS OF THE SPIE, SPIE, BELLINGHAM, VA, US, vol. 1913, 1 February 1993 (1993-02-01), pages 191-201, XP000195711 * the whole document * ----- | 1,16 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 27 June 2002 | With, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.                EP 01 83 0738

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2002

| Patent document cited in search report | | Publication date | Patent family member(s) | | Publication date |
|---|---|---|---|---|---|
| US 5883979 | A | 16-03-1999 | EP | 0735772 A2 | 02-10-1996 |
| | | | JP | 8274998 A | 18-10-1996 |
| US 5629780 | A | 13-05-1997 | NONE | | |

EPO FORM P0459

For more details about this annex : see Official Journal of the European Patent Office, No. 12/82